# EUROPÄISCHE PATENTANMELDUNG

(11) **EP 1 336 541 A2**
(43) Veröffentlichungstag der Anmeldung: **20.08.2003**
(21) Anmeldenummer: 03001810.5
(22) Anmeldetag: 29.01.2003
(51) Int. Cl.: B60S 3/06

(54) **Vorrichtung zum Behandeln der Oberfläche von Fahrzeugen**

(30) Priorität: 16.02.2002 DE 10206490
(71) Anmelder: WashTec Holding GmbH, 86153 Augsburg (DE)
(72) Erfinder: Riedl, Thomas, 86450 Altenmünster (DE)
(74) Vertreter: Rapp, Bertram, Dr.

(57) **Zusammenfassung**

Die Erfindung betrifft eine Vorrichtung zum Behandeln der Oberfläche von Fahrzeugen mit einer ersten, zu der Seitenfläche des Fahrzeugs in einem ersten Drehsinn (4) rotierenden Seitenbürste (1), die an mindestens einer senkrecht zu der Seitenfläche verlaufenden Führung (2) mittels eines Fahrwerks (3) verfahrbar angeordnet und gelenkig gelagert ist und beim Behandlungsvorgang lediglich durch Verfahren des Fahrwerks (3) in Richtung der Fahrzeugmitte eine Schrägstellung annimmt. Bekannte derartige Vorrichtungen laufen unruhig und weisen nur eine unzureichende Reinigungswirkung auf.

Die Aufgabe, eine Vorrichtung so weiterzubilden, dass eine deutlich bessere Reinigungswirkung auch von eingezogenen Karosseriebereichen ermöglicht wird, wird dadurch gelöst, dass an dem Fahrwerk (3) eine zweite, in entgegengesetztem Drehsinn (5) rotierende Seitenbürste (6) gelenkig gelagert ist, welche beim Behandlungsvorgang ebenfalls eine Schrägstellung annimmt.

## Beschreibung

Die Erfindung betrifft eine Vorrichtung zum Behandeln der Oberfläche von Fahrzeugen nach dem Oberbegriff des Anspruchs 1, insbesondere eine Vorrichtung zum Waschen bzw. Polieren von Kraftfahrzeugen in einer Fahrzeugwaschanlage. Beispiele für solche Fahrzeugwaschanlagen sind Kraftfahrzeug-, also Autowaschanlagen, bei denen das Fahrzeug entweder durch die verschiedenen Behandlungsvorrichtungen gezogen wird (Waschstraße) oder bei denen das Fahrzeug still steht und die Behandlungsvorrichtungen an einem oder mehreren beweglichen Portalen über das Fahrzeug bewegt werden (Portalwaschanlage).

Die Druckschriften JP (A) 08332921, JP (A) 03079455 und EP 0 980 802 A2 zeigen Fahrzeugwasch- bzw. Fahrzeugbehandlungsanlagen mit einer rotierenden Seitenbürste, die an einer senkrecht zu der Seitenfläche (also auch senkrecht zur Relativbewegung zwischen Fahrzeug und Waschbürste), verlaufenden Führung mittels eines Fahrwerks verfahrbar angeordnet und gelenkig gelagert ist. Diese Seitenbürste kann darüber hinaus mit Hilfe von Pneumatik- oder Hydraulikeinrichtungen schräg angestellt werden, um eine bessere Reinigung von eingezogenen Karosserieteilen zu erzielen. Dies ist insbesondere wichtig, wenn die Seitenfläche des Fahrzeugs starke Neigungen aufweist, die Seitenfenster also nach oben hin nach innen geneigt sind. Obwohl in den genannten Schriften teilweise auch zwei Bürsten dargestellt sind, handelt es sich hier nur um sogenannte Monobürsten, wobei jedem Fahrwerk eine Bürste zugeordnet ist, die getrennt verfahrbar und verstellbar ist. Soweit die Druckschriften zwei Seitenbürsten zeigen, sind diese an verschiedenen Fahrwerken angeordnet und dienen der Reinigung verschiedener Seitenflächen, beispielsweise der linken und rechten Seite, des Fahrzeugs.

Die in den genannten Druckschriften beschriebenen Vorrichtungen sind aufwendig und kompliziert, da sie zur Schrägstellung der Bürste eine eigene Verstelleinrichtung in Gestalt eines Hydraulik- oder Pneumatikzylinders benötigen. Dieser muß nicht nur vorgesehen und angesteuert werden, sondern auch je nach Gestalt des Fahrzeugs eingestellt werden. Hierzu ist wiederum eine Konturenerfassungsvorrichtung notwendig.

Aus dem Stand der Technik sind darüber hinaus Behandlungsanlagen bekannt, die zwei oder vier Seitenbürsten aufweisen, welche ebenfalls an einer Führung mittels eines Fahrwerkes verfahrbar gelagert und am Fahrwerk gelenkig, z. B. kardanisch aufgehängt sind. Die Seitenbürsten haben in ihrer Ausgangsstellung eine im wesentlichen vertikale Ausrichtung und können bei der Zustellung an die Seitenflächen des zu behandelnden Fahrzeuges sich schräg an dessen Karosserie anlegen. Dies erfolgt dadurch, daß das Fahrwerk nicht genau über der Seitenfläche des Fahrzeugs steht, sondern auf der Führung in Richtung der Fahrzeugmitte verfährt bzw. durch ein Gewicht dorthin gezogen wird. Die Seitenbürsten werden hierdurch schräg an die Karosserie angestellt und passen sich selbsttätig den Neigungen der Fahrzeugseitenfläche, insbesondere den Einzügen im Dachbereich an. Diese Anordnungen haben sich aber bei verschiedenen schweren Bürstenbelägen nicht bewährt, insbesondere bei Verwendung von alternativem Waschmaterial wie Waschtextil oder geschäumtem Polyethylen in Streifen- oder Lappenform. Die mit diesem Waschmaterial besetzten Bürsten laufen, verglichen mit normalen Bürsten, zu unruhig, da sie leichter Unwuchten haben, die sich in Verbindung mit einer kardanischen Aufhängung ungünstig auswirken.

Schließlich sind aus dem Stand der Technik, beispielsweise aus der von der Anmelderin vertriebenen Waschstraße WESUMAT 9609, sog. Zwillingsbürsten bekannt. Hierbei handelt es sich um Seitenbürstenanordnungen, bestehend aus zwei im wesentlichen parallelen und an einem gemeinsamen Fahrwerk aufgehängten vertikalen Seitenbürsten, die beide der Reinigung einer Fahrzeugseitenfläche dienen. Die Waschstraße WESUMAT 9609 weist daher zwei Paare von Zwillingsbürsten (insgesamt also vier Seitenbürsten) auf, wobei ein Paar der Reinigung der linken Seitenfläche und das andere Paar der Reinigung der rechten Fahrzeugseitenfläche dient. Die Zwillingsbürsten sind lediglich nach vorn bzw. nach hinten (bezogen auf die Relativbewegung zwischen Fahrzeug und Bürsten) ausschwenkbar, was zur Aktivierung von Steuerungskontakten benutzt wird. Da die Bürsten bei Annäherung des Fahrzeugs vor dem Fahrzeug positioniert sind führt der erste Steuerkontakt zu einem seitlichen Aussteuern der Bürste und der zweite Steuerkontakt löst als Notkontakt einen Bandstopp aus, um bei breiten Fahrzeugen einen übergroßen Anpreßdruck bei der Frontwäsche zu vermeiden. Schräg gestellt werden kann lediglich das gesamte Fahrwerk mit beiden daran gelagerten Zwillingsbürsten, und nur in einer Richtung, nämlich nach vorn oder hinten. Eine Schrägstellung des Fahrwerks oder gar einzelner Bürsten zur Seite hin ist nicht möglich, was zu den eingangs beschriebenen Defiziten bei der Reinigung von Einzügen im unteren Bereich oder im Fensterbereich der Seitenfläche des Fahrzeugs führt.

Es besteht daher die Aufgabe, eine gattungsgemäße Vorrichtung zum Behandeln der Oberfläche von Fahrzeugen, welche bereits eine zwangsgeführt schrägstellbare Bürste aufweist, so weiterzubilden, daß eine deutlich bessere Reinigungswirkung auch von eingezogenen Karosseriebereichen ermöglicht wird.

Gelöst wird diese Aufgabe mit den kennzeichnenden Merkmalen des Anspruchs 1. Vorteilhafte Ausgestaltungen und ein Verfahren zum Betrieb der erfindungsgemäßen Vorrichtung sind in den Unteransprüchen beschrieben.

Ein Ausführungsbeispiel der Erfindung wird im folgenden unter Bezugnahme auf die begleitenden Zeichnungen näher beschrieben, welche zeigen:
- **Figur 1:**: eine Seitenansicht einer erfindungsgemäßen Vorrichtung;
- **Figur 2:**: eine Frontansicht der in Figur 1 dargestellten Vorrichtung; und
- **Figur 3:**: eine Ansicht der in den Figuren 1 und 2 dargestellten Vorrichtung von oben.

Zur besseren Veranschaulichung der erfindungsgemäßen Vorrichtung in einer Fahrzeugwaschanlage ist in allen Zeichnungen die Relativbewegungsrichtung zwischen der Fahrzeuglängsachse (Fahrtrichtung des Fahrzeugs) und der Waschvorrichtung mit dem Pfeil 10 veranschaulicht. Bei Einbau der erfindungsgemäßen Vorrichtung in eine Portalwaschanlage bewegt sich, wie in der Beschreibungseinleitung erwähnt, das Portal mit der erfindungsgemäßen Waschvorrichtung. Bei Einsatz der Vorrichtung in einer Autowaschstraße ist die erfindungsgemäße Vorrichtung in Bezug auf die Bewegungsrichtung des Fahrzeugs ortsfest und das Fahrzeug wird an dieser Vorrichtung vorbei geschleppt.

In der folgenden Beschreibung wird auf eine Waschstraße Bezug genommen. Der Pfeil 10 gibt damit die Fahrtrichtung bzw. Schlepprichtung des Fahrzeuges an. Die beschriebene Waschvorrichtung dient der Reinigung der rechten Fahrzeugseite. Nicht beschrieben ist eine vorzugsweise ebenfalls anzubringende gleichartige Vorrichtung zur Reinigung der linken Fahrzeugseite.

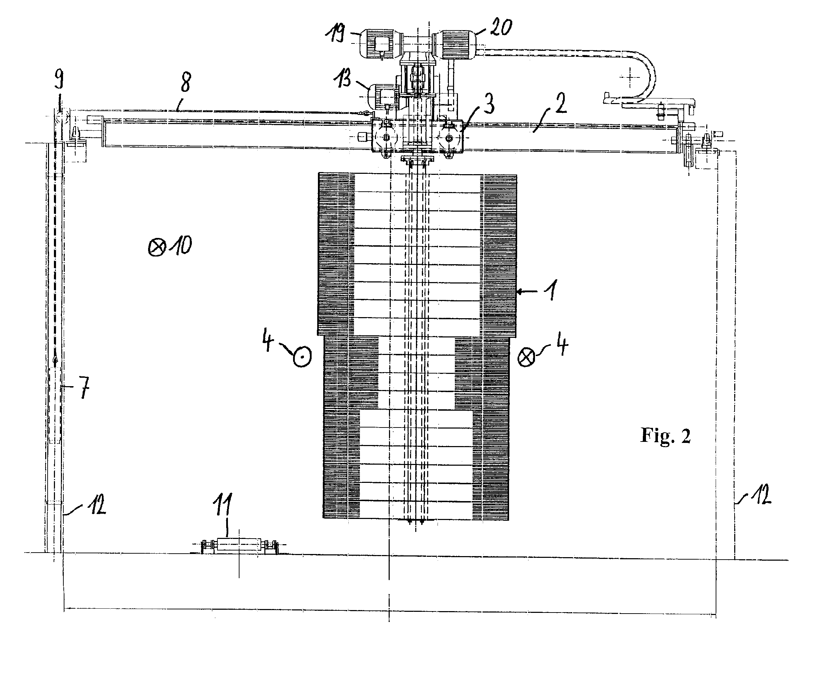

Figur 2 zeigt die erfindungsgemäße Waschvorrichtung, wie sie sich dem in dem zu waschenden Fahrzeug sitzenden Fahrer zunächst darstellt. Über der Schleppeinrichtung 11, auf welcher die linken Räder des Fahrzeugs laufen und geschleppt werden (nicht dargestellt ist eine entsprechende Einrichtung für die rechte Fahrspur) verläuft eine Führung 2, die in Gestalt eines Querträgers, vorzugsweise eines Doppel-T-Trägers ausgebildet ist und, zusammen mit entsprechenden Seitenträgern 12 ein Portal bildet. Auf dieser Führung 2 ist ein mit Hilfe eines Getriebemotors 13 angetriebenes Fahrwerk 3 angeordnet. An dem Fahrwerk 3 ist ferner ein Seilzug 8 befestigt, der parallel zu der Führung 3 bis zu einer Umlenkung 9 verläuft und dann nach unten umgelenkt wird. An dem Seilzug 8 hängt ein Gewicht 7, wodurch eine Zugkraft auf das Fahrwerk 3 nach links ausgeübt wird.

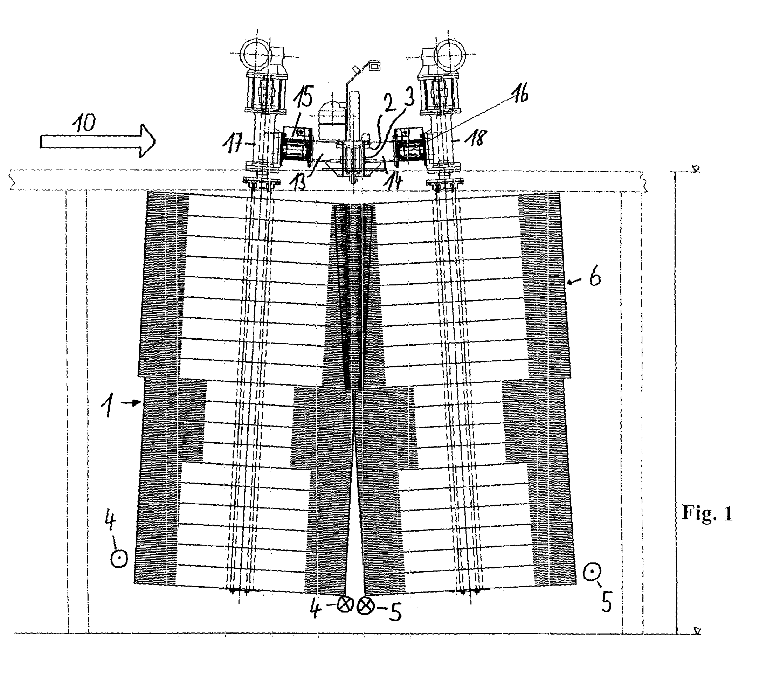

Die Lagerung der beiden Seitenbürsten 1 und 6 ist am besten in Figur 1 zu sehen. Das Fahrwerk 3 ist in Relativbewegungsrichtung 10 in an sich bekannter Weise auf der Führung 2 verkippbar, wodurch beide Seitenbürsten 1 und 6 in Richtung 10 gekippt werden. Dies ist nicht im einzelnen dargestellt.

An dem Fahrwerk 2 befinden sich zwei Rohrstücke 13 und 14, wobei das Rohrstück 13 entgegen der Bewegungsrichtung 10 absteht und das Rohrstück 14 in Bewegungsrichtung und in Verlängerung der Rohrstücks 13. Am Ende dieser Rohrstücke 13 und 14 befindet sich jeweils ein Drehlager 15 bzw. 16, an dessen anderem Ende die Achsen 17 bzw. 18 der Bürsten 1 bzw. 6 angeordnet sind. Durch die Drehlager 15 und 16 kann eine Verdrehung bzw. Verschwenkung der Achsen 17 und 18 der Bürsten 1 und 6 nach außen und innen um einen Winkel von bis zu 6° erfolgen. Diese Schrägstellung der Seitenbürsten 1 und 6 ist in Figur 1 nicht dargestellt. Die dort dargestellte Schrägstellung ist die Grundschrägstellung, die jedoch nicht in Seitenrichtung, sondern in Richtung der Relativbewegung 10 eingestellt ist.

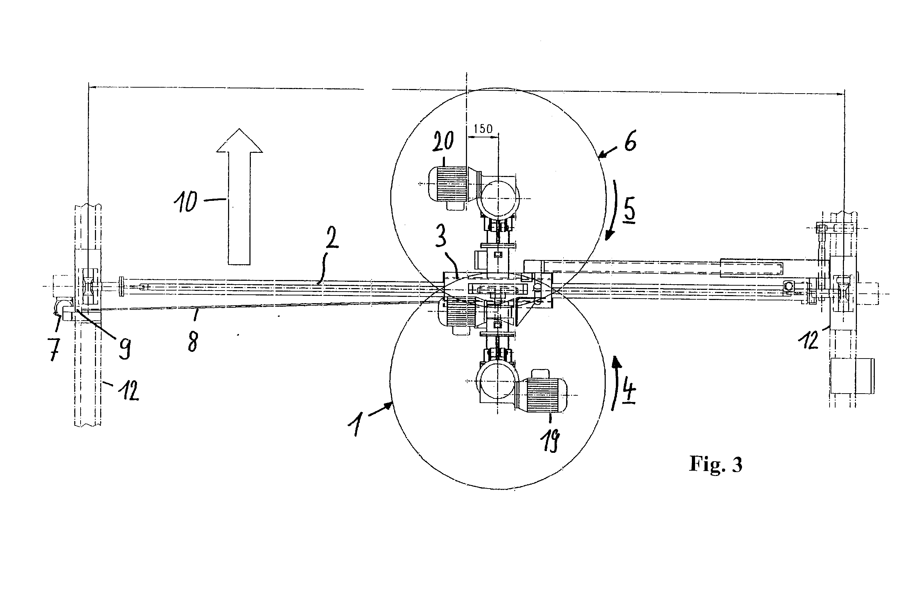

Beide Seitenbürsten 1 und 6 sind mit Hilfe der Getriebemotoren 19 bzw. 20 drehantreibbar, wobei die Getriebemotoren 19 und 20 derart eingestellt sind, daß die Rotation der Seitenbürsten 1 und 6 in entgegengesetztem Drehsinn 4 bzw. 5 erfolgt. Dieser Drehsinn 4 bzw. 5 ist in Figur 3 unmittelbar durch Pfeile dargestellt und in den Figuren 1 und 2 durch Kreissymbole, wobei der Punkt ein Heraustreten aus der Zeichenebene während der Drehung bedeutet und das Kreuz ein Hineinlaufen in die Zeichenebene während der Drehung.

Die verwendeten Seitenbürsten sind vorzugsweise mit textilem oder geschäumtem Waschmaterial besetzt, beispielsweise mit geschlossenzelligem, geschäumtem Polyethylen in Streifen- oder Lappenform.

Die beschriebene Vorrichtung arbeitet wie folgt:

Bewegt sich ein Fahrzeug innerhalb einer Waschstraße auf die Vorrichtung zu, steht die erste Seitenbürste 1 zunächst etwa in der Mitte der Fahrspur vor dem Fahrzeug wie es in Figur 2 dargestellt ist, wobei sich die zweite Seitenbürste 6 unmittelbar hinter der ersten Seitenbürste 1 befindet. Die erste Seitenbürste 1 rotiert im Drehsinn 4 mit ihrer linken Seite auf das Fahrzeug zu, also bezogen auf die Relativbewegung zwischen Fahrzeug und der dieses berührenden Oberfläche der Seitenbürste 1 in gegenläufigem Drehsinn. Die dahinter angeordnete zweite Seitenbürste 6 rotiert entgegengesetzt hierzu.

Sobald die Front des zu waschenden Fahrzeugs die erste Seitenbürste 1 berührt und nach vorn drückt bewirkt die so erzeugte Schrägstellung in Bewegungsrichtung 10 eine Kontaktauslösung im Bereich des Fahrwerks 3, wodurch der Getriebemotor 13 für das Fahrwerk 3 in Gang gesetzt wird und dieses auf der Führung 2 nach rechts, also in Richtung der zu reinigenden Seitenfläche des Fahrzeugs bewegt. Falls bei sehr breiten Fahrzeugen eine noch stärkere Auslenkung des Zwillingsbürstenpaares 1 und 6 nach vom erfolgt, kommt es zu einem kurzfristigen Stopp des Transportbandes. Sobald die Seitenbürste 1 den Übergangsbereich zwischen Fahrzeugfront und Seitenfläche erreicht hat wird der Getriebemotor 13 für das Fahrwerk 3 frei geschaltet, wodurch das Fahrwerk 3 durch die Anordnung aus Seilzug 8, Umlenkung 9 und Gewicht 7 einer nach links gerichteten Zugkraft auf der Führung 2 unterworfen ist. Da die Seitenbürsten 1 und 6 jedoch an der Seitenfläche des Fahrzeugs anliegen führt dies zu einer Schrägstellung beider Seitenbürsten 1 und 6, wobei ein Kräftegleichgewicht entsteht.

Von besonderer Bedeutung ist, daß die Schrägstellung der beiden Seitenbürsten 1 und 6 unterschiedlich ist. Während die erste Seitenbürste 1 bezogen auf die Transportrichtung 10 gegenläufig rotiert, dreht sich nämlich die zweite Seitenbürste 6 mitlaufend. Hierdurch ergeben sich unterschiedlich Relativgeschwindigkeiten zwischen Seitenfläche und Bürste, was wiederum zu einem unterschiedlichen Drehmoment bei der Bürstenlagerung an dem Fahrwerk 3 führt. Hierdurch entsteht wiederum eine unterschiedliche Schrägstellung beider Bürsten 1 und 6. Während beispielsweise die Bürste 1 einen Winkel von 6° zur Vertikalen einnimmt, nimmt die Bürste 6 nur einen Winkel von 4° ein.

Aufgrund der unterschiedlichen Schrägstellungen beider Bürsten, die durch die Zwangsführung und die unterschiedlichen Drehrichtungen in Verbindung mit der Transportgeschwindigkeit bedingt werden, entsteht ein deutlich besserer Reinigungseffekt, da eine Seitenbürste 1 mehr den oberen Bereich und die andere Seitenbürste 1 mehr den unteren Bereich der Seitenfläche mit den jeweiligen Einzügen reinigen kann.

Bei der Front- und Heckwäsche ist durch die gegenläufige Drehrichtung in der Front und die mitlaufende Drehrichtung am Heck dafür gesorgt, daß diese Partien des Fahrzeuges automatisch und ohne weitere Steuerungsmechanismen mit einer senkrecht stehenden Bürste gewaschen werden. Dies ist bei hohen Fahrzeugen wie Transportern und Kleinbussen durch die Wahl der Schwenkpunktes der Bürste ebenfalls rein mechanisch vorgegeben. Durch die Schwenkmöglichkeit beider Bürsten wird vor allem beim Übergang von der Front- zur Seitenwäsche und auch von der Seitenwäsche zur Heckwäsche ein "Springen" der Bürstenanordnung vermieden und damit ein schonenderer Wascheffekt erreicht.

Im Gegensatz zu den in der Beschreibungseinleitung genannten Systemen, bei denen die Schräglage der Bürsten über Luft- oder Hydraulikzylinder erreicht oder vermieden wird, paßt sich das beschriebene System selbständig ideal jeder Fahrzeugkontur an.

## Patentansprüche

1. Vorrichtung zum Behandeln der Oberfläche von Fahrzeugen mit einer ersten, zu der Seitenfläche des Fahrzeug in einem ersten Drehsinn (4) rotierenden Seitenbürste (1), die an mindestens einer senkrecht zu der Seitenfläche verlaufenden Führung (2) mittels eines Fahrwerks (3) verfahrbar angeordnet und gelenkig gelagert ist und beim Behandlungsvorgang lediglich durch Verfahren des Fahrwerks (3) in Richtung der Fahrzeugmitte eine Schrägstellung annimmt, **dadurch gekennzeichnet, daß** an dem Fahrwerk (3) eine zweite, in entgegengesetztem Drehsinn (5) rotierende Seitenbürste (6) gelenkig gelagert ist, welche beim Behandlungsvorgang ebenfalls eine Schrägstellung annimmt.

2. Vorrichtung nach Anspruch 1, **dadurch gekennzeichnet, daß** auf das Fahrwerk (3) eine seitliche Zugkraft wirkt, welche die Seitenbürsten (1, 6) zu der Seitenfläche zieht und die Schrägstellung bewirkt.

3. Vorrichtung nach Anspruch 2, **dadurch gekennzeichnet, daß** die Zugkraft durch mindestens ein Gewicht (7) verursacht wird, welches über einen Seilzug (8) und eine Umlenkung (9) mit dem Fahrwerk (3) verbunden ist.

4. Vorrichtung nach Anspruch 1, **dadurch gekennzeichnet, daß** die Seitenbürsten (1, 6) mit textilem oder geschäumtem Material besetzt sind.

5. Vorrichtung nach einem der voranstehenden Ansprüche, **dadurch gekennzeichnet, daß** sie mindestens einen Anschlag für die maximale Schrägstellung der Seitenbürsten (1, 6) aufweist.

6. Vorrichtung nach einem der voranstehenden Ansprüche, **dadurch gekennzeichnet, daß** die das Fahrzeug bei dem Behandlungsvorgang zuerst berührende Seitenbürste (1) - bezogen auf die Relativbewegung zwischen dem Fahrzeug und der dieses berührenden Oberfläche der Seitenbürste (1) - einen gegenläufigen Drehsinn aufweist.

7. Vorrichtung nach einem der voranstehenden Ansprüche, **dadurch gekennzeichnet, daß** die Schrägstellungen der ersten und zweiten Seitenbürste (1, 6) beim Behandeln des Fahrzeugs aufgrund der unterschiedlichen Relativgeschwindigkeiten zwischen Bürstenoberflächen und Seitenfläche verschieden sind.

8. Verfahren zum Betrieb einer Vorrichtung nach einem der Ansprüche 2 bis 6, **dadurch gekennzeichnet, daß** die Seitenbürsten (1, 6) etwa mittig vor dem Fahrzeug positioniert werden und nach Berührung durch die Front des Fahrzeugs unter Behandlung etwa einer Hälfte der Front zur Seite verfahren werden, um anschließend die Seitenflächen zu behandeln wobei der Antrieb des Fahrwerks (3) freigeschaltet wird und die Seitenbürsten (1, 6) durch die wirkende Zugkraft schräg an dem Fahrzeug anliegen.
